# EUROPEAN PATENT APPLICATION

(11) **EP 2 071 445 A1**
(43) Date of publication of application: **17.06.2009**
(21) Application number: 07828686.1
(22) Date of filing: 28.09.2007
(51) Int. Cl.: G06F 3/048, H04M 1/247

(54) **MOBILE TERMINAL HAVING MULTI-TASK FUNCTION AND TASK ICON DISPLAY METHOD**

(30) Priority: 29.09.2006 JP 2006268103
(71) Applicant: NEC Corporation, Tokyo 108-0014 (JP)
(72) Inventor: NAKAYAMA, Junya, Tokyo 108-0014 (JP)
(74) Representative: Betten & Resch
(86) International application number: PCT/JP2007/068944
(87) International publication number: WO 2008/041628

(57) **Abstract**

A portable terminal according to the present invention is a portable terminal including a multitask function and a task icon display unit, including: a display unit for displaying one or more task icons in order of starting histories of tasks when the one or more task icons are displayed in the task icon display unit; and a highlight unit for highlighting an icon of a task selected by a user among the one or more task icons being displayed during transition to task switching.

## Description

### {Technical Field}

The present application is based upon and claims the benefit of the priority from Japanese Patent Application No. 2006-268103, filed on September 29, 2006, the disclosure of which is incorporated herein in its entirety by reference.

The present invention relates to a portable terminal with a multitask function and a task icon display method adapted to the portable terminal.

### {Background Art}

Conventionally, a portable terminal related to the present application includes a multitask function similarly to a portable terminal according to the present invention and icons are displayed in a task area whenever each task is executed. The "multitask function" mentioned herein is a function of enabling a plurality of functions to be executed in parallel. Further, an active task refers to a task currently in use if a user executes multitasks. Furthermore, there is known a task display switching method (see, for example, Patent Document 1) for enabling performing an operation for switching to display of each application software if a plurality of application software is booted and processed in parallel in a portable device.

Patent Document 1: Japanese Patent Application Laid-Open No.

### {Summary of Invention}

However, if task switching is to be performed in the portable terminal related to the present application, the user takes labor and time to switch tasks since an icon of the task currently in use is highlighted among task icons displayed on the task area.

It is, therefore, an object of the present invention to provide a portable terminal with a multitask function capable of reducing change procedures for task switching if the task switching is to be performed while the multi task function is being executed in the portable terminal, and a task icon display method adapted to the portable terminal.

According to a first aspect of the present invention, there is provided a portable terminal including a multitask function and a task icon display unit, including: a display unit for displaying one or more task icons in order of starting histories of tasks when the one or more task icons are displayed in the task icon display unit; and a highlight unit for highlighting an icon of a task selected by a user among the one or more task icons being displayed during transition to task switching.

Furthermore, according to a second aspect of the present invention, there is provided a task icon display method for a portable terminal with a multitask function, including steps of: displaying one or more task icons in order of starting histories of tasks when the one or more task icons are displayed in a task icon display unit; and highlighting an icon of a task selected by a user among the one or more task icons being displayed during transition to task switching.

According to the present invention, user's operation for task switching can be easily performed.

### {Brief Description of Drawings

Fig. 1 is a schematic block diagram of a portable terminal with a multitask function according to an embodiment of the present invention.
Fig. 2 is a view showing an example of a screen displayed in a display unit of the portable terminal according to the embodiment of the present invention.
Fig. 3 is a view showing a display example of the multitask function having a tree structure according to the embodiment of the present invention.
Fig. 4 is an explanatory view for a task switching operation performed by the multitask function according to the embodiment of the present invention.

### {Description of Embodiments}

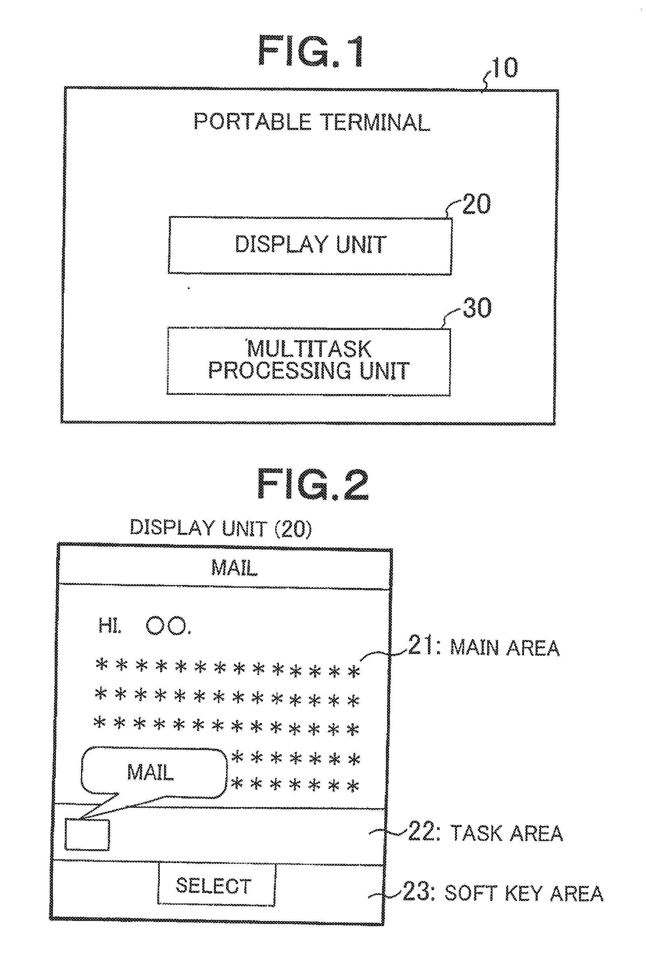

Fig. 1 is a schematic block diagram of a portable terminal with a multitask function according to the present invention. A portable terminal 10 includes a display unit 20 constituted by an LCD (Liquid Crystal Display) or the like and a multitask processing unit 30 including a CPU and the like. The multitask processing unit 30 functions to start a plurality of tasks and to execute the started plural tasks in parallel. Examples of the tasks executed by the multitask processing unit 30 include music, mail, Web browsing, applications such as a game application, tools including a camera function, a telephone directory, settings of the respective functions and the like.

Fig. 2 shows an example of a screen displayed in the display unit 20 of the portable terminal 10. The screen is constituted by a main area 21 for displaying a task menu and a content of a task currently in use, a task area (task icon display unit) 22 for displaying an icon of each task whenever the task is executed and a soft key area 23 for displaying a SELECT key button and the like.

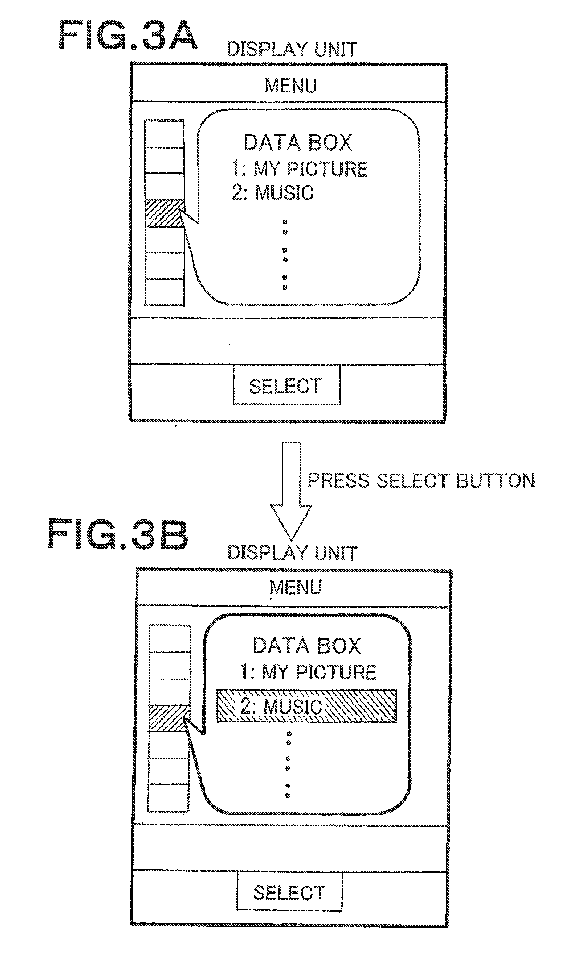

Fig. 3 shows a display example of the multitask function having a tree structure. Fig. 3(a) shows the display unit 20 in which a task menu is displayed, and a list of icons of tasks included in the menu is displayed in the display unit 20. If a user moves a cursor onto a "data Box" icon among the icons in the list, items included in the "data Box" are displayed in the form of a dialog balloon. If the user presses the SELECT button in that state, the cursor is displayed in the dialog balloon as shown in Fig. 3(b) (in Fig. 3(b), a highlighted portion ("2: Music") is a portion on which the cursor is currently put). If the user moves the cursor onto, for example, "Music" and presses the SELECT button, a music player function is executed.

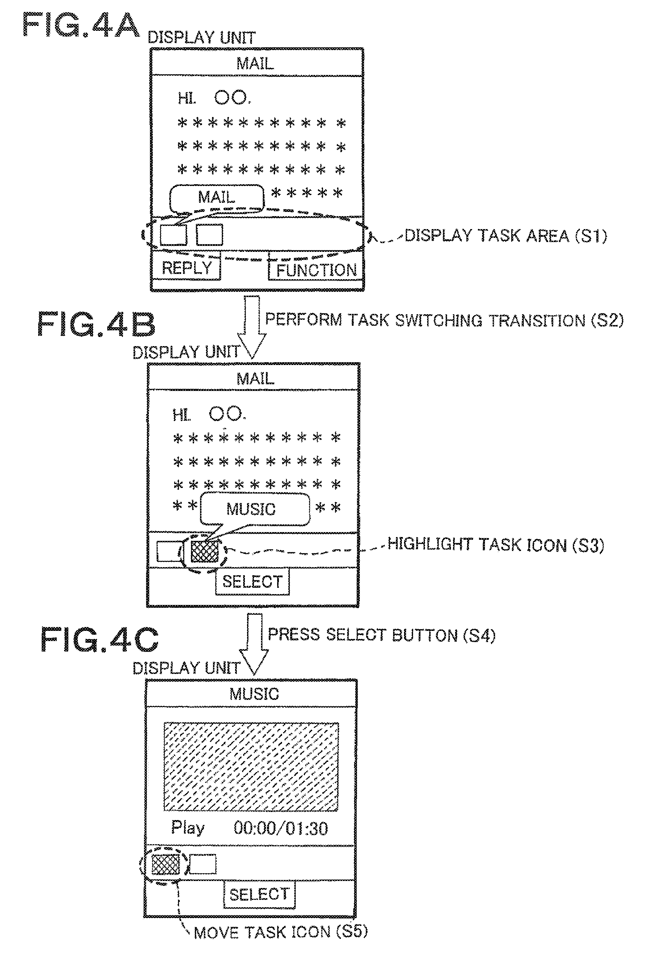

Referring to Fig. 4, operation for allowing the user to perform task switching using the multitask function of the portable terminal will next be described.

Fig. 4(a) shows an instance in which the portable terminal 10 receives a mail and executes a mail viewing function without finishing a music player when the user is listening to music by the music player function of the portable terminal 10. While the mail function is being executed in the foreground, the music player function suspends. The display unit 20 displays the received mail in the main area 21, displays task icons in order of starting history such as the task currently in use and the task previously used to display the task icon of the mail and the task icon of the music player in order from the left in the task area 22 (S1). A name "Mail" of the task function of the active task that is currently in use is displayed in the form of a dialog balloon.

If the user performs a task switching transition processing by button operation or the like in an input unit (not shown) of the portable terminal 10 (S2), the display unit 20 highlights not the active task icon currently in use but the second task icon used previously from the left (S3). Example of highlighting the icon include enlarging the icon, changing the color of icon, indicating the icon by boldface, changing brightness of the icon, and displaying the icon in the form of a dialog balloon and the like. In this example, the brightness is changed and "Music" is displayed in the form of the dialog balloon. Alternatively, the task icon can be highlighted by displaying a symbol (such as a music note in case of Music).

If the user presses the SELECT button in the soft key area 23 in that state (S4), then switching to a music player mode is executed, the music player is displayed in the main area 21 and the active task icon ("Music" icon) is moved to the leftmost and displayed in the task area 22 as shown in Fig. 4(c) (S5).

In this way, according to the present invention, for the task icons displayed in the task area 22 of the display unit 20, not the active task currently in use but the icon of the task previously used is highlighted by default during transition to the task switching, thereby making it possible to reduce change procedures for the task switching.

### INDUSTRIAL APPLICABILITY

The present invention is applied to a portable telephone terminal including a multitask function or a portable terminal device, such as a PHS (Personal Handy Phone) or a PDA (Personal Digital Assistant), having a small screen and including only a limited display area, thereby making it possible to improve user-friendliness of the portable terminal device.

Although the exemplary embodiments of the present invention have been described in detail, it should be understood that various changes, substitutions and alternatives can be made therein without departing from the spirit and scope of the invention as defined by the appended claims. Further, it is the inventor's intent to retain all equivalents of the claimed invention even if the claims are amended during prosecution.

### {Description of Reference Symbols}

- 10: Portable terminal
- 20: Display unit
- 21: Main area
- 22: Task area
- 23: Soft key area
- 30: Multitask processing unit

## Claims

1. A portable terminal including a multitask function and a task icon display unit, comprising:
a display unit for displaying one or more task icons in order of starting histories of tasks when said one or more task icons are displayed in said task icon display unit; and
a highlight unit for highlighting an icon of a task selected by a user among the one or more task icons being displayed during transition to task switching.

2. The portable terminal with the multitask function according to claim 1,
wherein said highlighted task icon is selected, thereby executing switching the selected task to an active task and moving the task icon of the active task to a latest position in order of the starting histories.

3. The portable terminal with the multitask function according to claim 1 or 2,
wherein said multitask function has a tree structure, and child-node task functions currently used or previously used are displayed each by a character or a symbol with respect to a parent-node task icon of the tree structure.

4. A task icon display method for a portable terminal with a multitask function, comprising steps of:
displaying one or more task icons in order of starting histories of tasks when said one or more task icons are displayed in a task icon display unit; and
highlighting an icon of a task selected by a user among the one or more task icons being displayed during transition to task switching.

5. The task icon display method for the portable terminal with the multitask function according to claim 4,
wherein said highlighted task icon is selected, thereby executing switching the selected task to an active task and moving the task icon of the active task to a latest position in order of the starting histories.

6. The task icon display method for the portable terminal with the multitask function according to claim 4 or 5,
wherein said multitask function has a tree structure, and child-node task functions currently used or previously used are displayed each by a character or a symbol with respect to a parent-node task icon of the tree structure.
